# EUROPEAN PATENT APPLICATION

(11) **EP 1 564 659 A1**
(43) Date of publication of application: **17.08.2005**
(21) Application number: 04300072.8
(22) Date of filing: 10.02.2004
(51) Int. Cl.: G06F 17/30

(54) **Method and system of bookmarking and retrieving electronic documents**

(71) Applicant: Hewlett-Packard Development Company, L.P., Houston, TX 77070 (US)
(72) Inventor: Peuziat, Xavier HP Centre de Competences France, 38290 Satolas et Bonce (FR); Guyot, Galina HP Centre de Compétences France, 38920 Crolles, Cedex 209 (FR); Huve, Frederic HP Centre de Compétences France, 38190 Villard Bonnot (FR); Wieczorek, Philippe HP cntre de Competences France, 38330 Saint Ismier (FR)
(74) Representative: Lloyd, Richard Graham

(57) **Abstract**

According to one aspect of the present invention, there is provided a document browsing system for storing, in response to a user request, bookmark information relating to a document presentable to a user through an interpreter, the document comprising mark-up language and being providable to the interpreter by a document server, the system comprising a document processor for inserting in the document prior to the document being presented to the user additional mark-up language for enabling the user request to be made through the interpreter, and a data store for storing the bookmark information in response to the user request.

## Description

The present invention relates generally to the field of electronic document retrieval, and more particularly to electronic document browsing systems for the retrieval and browsing of electronic documents described using a mark-up language, such as one of the family of extensible mark-up languages (xML).

Mark-up languages provide a way of describing, in addition to content information, the way in which the content should be presented. For example, the hypertext mark-up language (HTML) is a widely used mark-up language used for describing web pages or documents on the Internet. Those skilled in the art will appreciate that the terms page or document used herein are commonly used when referring to a computer file written using a mark-up language.

HTML, like other mark-up languages, defines a set of tags which may be used to describe the way in which the content part of web pages should be displayed when such pages are viewed. In order to view such pages a client-side application commonly referred to as an Internet browser is used. The Internet browser parses the web page identifying any tags therein, and formats the content included in the page as described by the tags. The browser also provides a user interface through which a user may interact with the displayed web page, for example by selecting so-called hypertext links provided in the document, to request the retrieval and display of additional web pages identified by the links.

HTML pages, like other xML documents, are generally arranged in a hierarchical fashion, having a root document, typically known as the welcome or home document, through which access may be made to one or more other documents in the collection of documents. Typically, each document has a specific identifier or address known as a universal resource indicator (URI), and links to other documents may be provided by hyperlinks which identify additional documents by way of their URI. A URI may describe local as well as remotely available documents.

In addition to the basic formatting and displaying of HTML pages, Internet browsers generally provide browser specific functionality such as bookmarking. Bookmarking enables a user to a save, typically on a storage device of a computing device hosting the browser, a link to a document to enable the document to be retrievable at a later dated. The stored link will typically be the URI of the document. Since web sites are typically arranged in a hierarchical fashion, bookmarking allows a user to quickly return to a previously viewed page without having to navigate through multiple pages in order to arrive at a page.

Another xML language is voice xML (VoiceXML). VoiceXML is a mark-up language used in interactive voice applications for creating and describing interactive voice dialogs, such as those commonly encountered when calling automated telephony banking services, telephone booking and reservation systems, and the like. A VoiceXML document specifies each interaction dialog to be conducted by a VoiceXML interpreter. User input affects dialog interpretation and is collected into requests submitted to a document server. The document server replies with another VoiceXML document to continue the user's session with other dialogs. Document servers, which may be external to the implementation platform, maintain overall service logic, perform database and legacy system operations, and produce dialogs.

A VoiceXML interpreter is broadly analogous to an Internet browser in the Internet world. A VoiceXML interpreter provides a user interface and the technical means to allow a user to interact with a dialog using voice recognition, voice synthesis and dual tone multi frequency (DTMF) tone detection. A collection of VoiceXML documents dependent on a common root document is commonly referred to as a voice application, with the documents dependent on a root document commonly referred to as leaf documents.

Unlike HTML browsers which are typically client-side applications, VoiceXML interpreters are typically server-side. This is mainly due to the complex and resource intensive functionality a VoiceXML interpreter provides, such as advanced voice recognition and speech synthesis. Typically such interpreters are hosted by specialised implementation platforms, such as a voice server or media platform, such as the Hewlett-Packard Opencall Media Platform (OCMP). These systems additionally provide telephony functions allowing users to establish calls with a voice application as well as allowing the voice application to perform telephony operations such as call termination, call forwarding and so on.

To access a voice application a user typically establishes a telephone call with a voice server or media platform hosting the VoiceXML interpreter which provides access to the VoiceXML pages making up the voice application.

However, VoiceXML interpreters do not inherently provide bookmarking functionality, and consequently users of voice applications are thus unable to store and retrieve user defined bookmarks in an equivalent manner to that provided by an Internet browser. Given the increasing complexity of many voice applications it is becoming increasingly desirable to provide users with a way of quickly accessing previously accessed documents.

Accordingly, one aspect of the present invention is to alleviate or overcome at least some of the above mentioned problems.

According to a first aspect of the present invention, there is provided a document browsing system for storing, in response to a user request, bookmark information relating to a document presentable to a user through an interpreter, the document comprising mark-up language and being providable to the interpreter by a document server. The system comprises a document processor for inserting in the document prior to the document being presented to the user additional mark-up language for enabling the user request to be made through the interpreter, and a data store for storing the bookmark information in response to the user request.

Dynamically modifying VoiceXML documents in this way enables bookmark functionality to be provided to a user of a voice application without requiring changes to be made to either the VoiceXML interpreter or the original documents making up the voice application. Such bookmarking functionality may be added to existing systems that have standard VoiceXML compliant interpreters.

The document is preferably the root document of a plurality of hierarchically arranged documents.

The documents may form a voice application. The mark-up language may be the Voice extensible markup language (VoiceXML), in which case the interpreter would be a VoiceXML interpreter.

Preferably the inserted mark-up language is inserted in the root document thereby enabling the user to make the user request irrespective of which of the plurality of documents is being presented by the interpreter at the time the request is made.

Suitably the inserted mark-up language defines at least one grammar, the triggering of which causes an event to be triggered.

Suitably the system includes an event handler for catching the event, for obtaining details of the current document and for causing the obtained details to be stored in the data store.

The details of the current document may be obtained through helper information additionally inserted in each document by the document processor prior to presentation of the document. Preferably the helper information identifies a document. The helper information may additionally identify a dialogue within the document.

The stored information preferably includes a link to the document and a tag. The tag may be a text string derived from the inserted helper information. Alternatively, the tag may be an audio file recorded by the user.

According to a second aspect of the present invention, there is provided a document browsing system for accessing, in response to a user request, a bookmarked document a link to which is stored in a storage device, the document browsing system providing access to a plurality of documents comprising mark-up language, the documents being presentable to the user through an interpreter. The system comprises a document server for providing one of the plurality of documents to the interpreter, and a document processor for inserting in at least one document presented to the user prior to the document being presented additional mark-up language enabling the user request to be made.

The plurality of documents may be hierarchically arranged. Preferably the additional mark-up language is inserted into the root document of the plurality of hierarchically arranged documents such that the user request may be made irrespective of which of the plurality of documents is being presented by the interpreter at the time the request is made. Alternatively, the additional mark-up language may be inserted into each document prior to presentation by the interpreter.

Suitably the document browsing system forms an interactive voice application.

Preferably the mark-up language is the voice extensible mark-up language (VoiceXML), in which case the interpreter is a suitable VoiceXML interpreter. Preferably the inserted mark-up language defines a grammar.

Suitably the inserted mark-up language causes, in response to the user request, a document to be presented to the user, the document including a link to the bookmarked document.

Suitably the inserted mark-up language causes, in response to the user request, the bookmarked document to be presented to the user through the user interface.

Preferably the inserted mark-up language defines a grammar and the link.

Suitably the link is the tag determined in accordance with the operation of the system as previously described above.

According to a third aspect of the present invention, there is provided a method of bookmarking a document, in response to a user request, wherein the document comprises mark-up language and is presentable to a user through an interpreter. The method comprises providing the document to the interpreter, inserting in the document prior to the document being presented to the user additional mark-up language for enabling the user request to be made through the interpreter, and storing information relating to the document in response to the user request.

Preferably the document is the root document of a plurality of hierarchically arranged documents.

Suitably the documents form a voice application, in which case the mark-up language is preferably the Voice extensible markup language (VoiceXML), and the interpreter is a VoiceXML interpreter.

Preferably the step of inserting the mark-up language is adapted for inserting the mark-up language in the root document thereby enabling the user to make the user request irrespective of which of the plurality of documents is being presented by the interpreter at the time the request is made.

Preferably the inserted mark-up language defines at least one grammar.

Suitably an event is triggered when the grammar is detected.

The method preferably further comprises catching the event in an event handler, obtaining details of the current document and storing the obtained details in the data store.

Suitably the step of inserting further comprises inserting helper information identifying the details of the current document. The helper information may additionally identify a dialogue within the document.

Preferably the step of storing further comprises storing a link to the document and a tag.

Preferably the tag is text string derived from the inserted helper information. Alternatively, the tag may be audio file recorded by the user.

According to a fourth aspect of the present invention, there is provided a method of accessing in a document browsing system, in response to a user request, a bookmarked document a link to which is stored in a storage device, the document browsing system providing access to a plurality of documents comprising mark-up language, and in which the documents are presentable to the user through an interpreter. The method comprises providing the presented document to the interpreter, and inserting in at least one presented document prior to the document being presented to the user additional mark-up language enabling the user request to be made.

Preferably the plurality of documents are hierarchically arranged and the step of inserting the additional mark-up language is adapted for inserting the mark-up language of the root document of the plurality of hierarchically arranged documents such that the user request may be made irrespective of which of the plurality of documents is being presented by the interpreter at the time the request is made.

The step of inserting the additional mark-up language is preferably adapted for inserting the mark-up language into each document prior to presentation by the interpreter.

The document browsing system preferably forms an interactive voice application.

Preferably the mark-up language is the voice extensible mark-up language (VoiceXML) in which case the interpreter is a VoiceXML interpreter, and the inserted mark-up language defines a grammar.

Preferably a document is presented to the user, in response to the user request, the document including a link to the bookmarked document. Alternatively, in response to the user request the bookmarked document is presented to the user.

Preferably the inserted mark-up language defines a grammar and the link.

Preferably the link is the tag determined in accordance with the operation of the system as described above.

Embodiments of the present invention will now be described, by way of example only, with reference to the accompanying diagrams, in which:
Figure 1 is a block diagram of a typical VoiceXML system according to the prior art;
Figure 2 is a block diagram of a hierarchical arrangement of VoiceXML documents;
Figure 3 is a block diagram of a VoiceXML system according to an embodiment of the present invention;
Figure 4 is a flow diagram outlining example processing steps according to an embodiment of the present invention;
Figure 5 is a flow diagram outlining example processing steps according to an embodiment of the present invention; and
Figure 6 is a flow diagram outlining example processing steps according to an embodiment of the present invention;

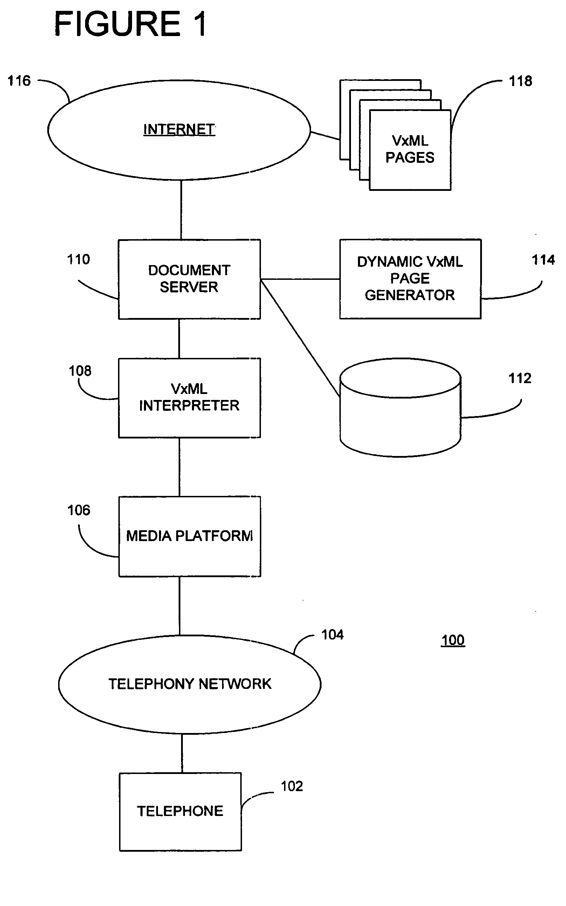

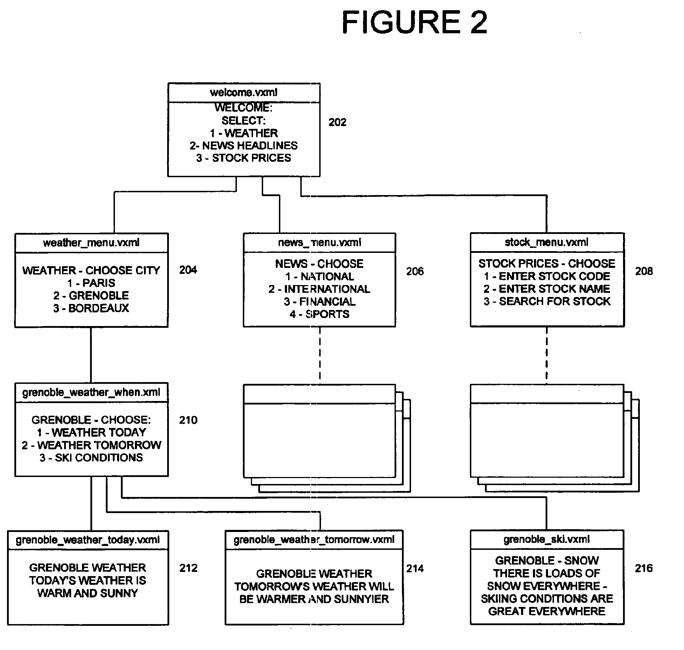

Reference is now made to Figure 1, which shows a block diagram of a typical VoiceXML system 100 according to the prior art, and Figure 2 which is a block diagram of an example hierarchical arrangement of VoiceXML documents.

A user (not shown) of a telephone 102 accesses an interactive voice application, such as automated telephone banking service or information service, by establishing a telephone call, through a suitable telecommunications network 104, to a media platform 106 such as a Hewlett Packard OpenCall Media Platform (OCMP). The telecommunications network 104 may be any suitable telephony type network, such as a public switched telephone network (PSTN), a mobile telephone network, a voice over IP (VoIP) network, or the like.

When a new call is established with the media platform 106 a predefined root VoiceXML document 202 is retrieved by the document server 110. Although shown separately, it will be appreciated that the VoiceXML interpreter 108 and the document server 110 may be integral to the media platform 106 and may, for example, be implemented as software applications or objects. Furthermore, in order to allow multiple concurrent users to access the voice application, the media platform may run multiple instances of the VoiceXML interpreter 108 and document server 110, with each instance supporting an individual caller. Additionally, the VoiceXML interpreter and/or the document server 110 may be separate modules and may also be external to the media platform 106.

The VoiceXML document 202 retrieved by the document server 110 is typically the home or welcome document of a hierarchical collection of documents, and is generally the root of a hierarchical collection of documents. The VoiceXML document 202 may be supplied to the document server 110 from a database or storage device 112 containing stored VoiceXML documents. Alternatively, VoiceXML documents may be stored on an external network, such as the Internet, in which case the home document may be retrieved across the Internet 116 from a storage device 118. VoiceXML documents may also be generated dynamically, or on-the-fly, by a suitable dynamic VoiceXML generator 114. The dynamic generator 114 may be a suitable software application or module.

The welcome document 202 is passed from the document server 110 to the VoiceXML interpreter 108 which interprets and presents the document to the user in the way defined by the tags incorporated therein. For example, the content of the document may contain a welcome message, and associated tags may indicate that the welcome message be created and played to the user by text-to-speech converter using, for example, a female voice having a given accent. As is well understood in the art, a VoiceXML document may represent one or more dialogs. Each dialog may be either a menu, offering choices for a user, or a form, requesting information from the user.

The home document may provide the user with a number of menus or options, such as:
"Welcome to the HP Voice Information Service"
"Press or say '1' to hear the weather"
"Press or say '2' to hear the news headlines"
"Press or say '3' to hear the latest stock prices"

The VoiceXML interpreter 108 intercepts the user responses to such options, for example by detecting either DTMF tones or performing speech analysis, and sends appropriate control signals corresponding to the user response to the document server 110. The control signals may, for example, be in the form of a HTTP request. If the user wishes to hear weather information, he either pushes the '1' key on the telephone handset 102 or speaks the word "Weather" or "One"., which causes a request to retrieve the document 204 to be sent to the document server 110.

VoiceXML document 204 may present additional choices to the user, such as:
"Press 1 to hear the weather in Paris"
"Press 2 to hear the weather in Grenoble"
"Press 3 to hear the weather in Bordeaux"
etc.

If the user wishes to hear the weather in Grenoble today, he makes the appropriate selection, and the VoiceXML document 210 is retrieved and presented to the user.

VoiceXML document 210 may present additional choices to the user, such as:
"Press 1 to hear the weather in Grenoble today"
"Press 2 to hear the weather in Grenoble tomorrow"
"Press 3 to hear the ski conditions around Grenoble"
etc.

On making the appropriate selection, the VoiceXML document linked thereto is retrieved and is presented to the user.

For a user who habitually uses such a voice service, and wishes to listen to the "Weather in Grenoble today" each time the voice application is called the fact that each menu must be passed through in order to arrive at the desired information is somewhat cumbersome and time consuming.

What is desired is a way of bookmarking such a document, or a specific position within a document so that, once a bookmark has been set the bookmarked document may be quickly recalled, without requiring the user to navigate through multiple menus, even on subsequent calls to the voice application. One of the problems, however, is that voice applications are only accessible through client-side VoiceXML interpreters which do not provided inherent support for bookmarking.

Various embodiments of such a system according to the present invention are described below.

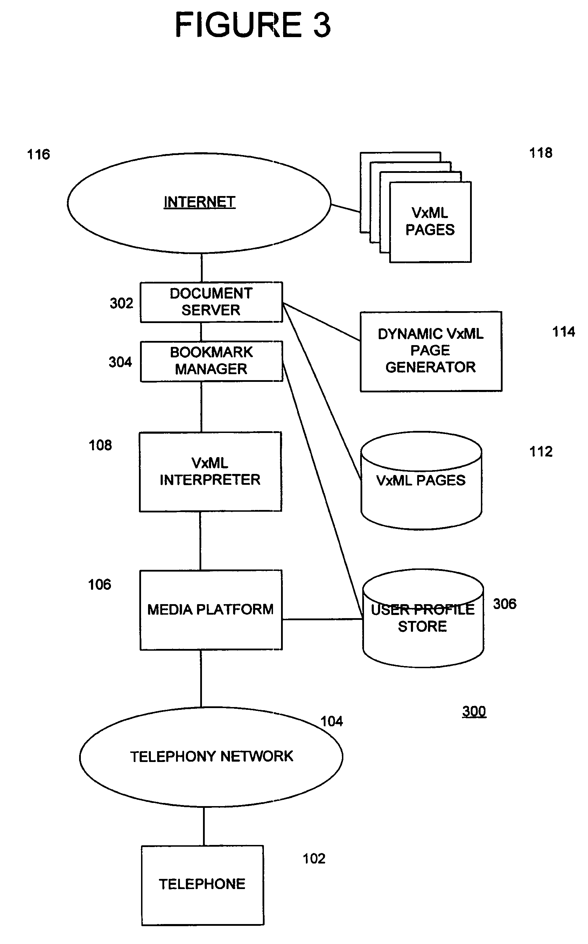

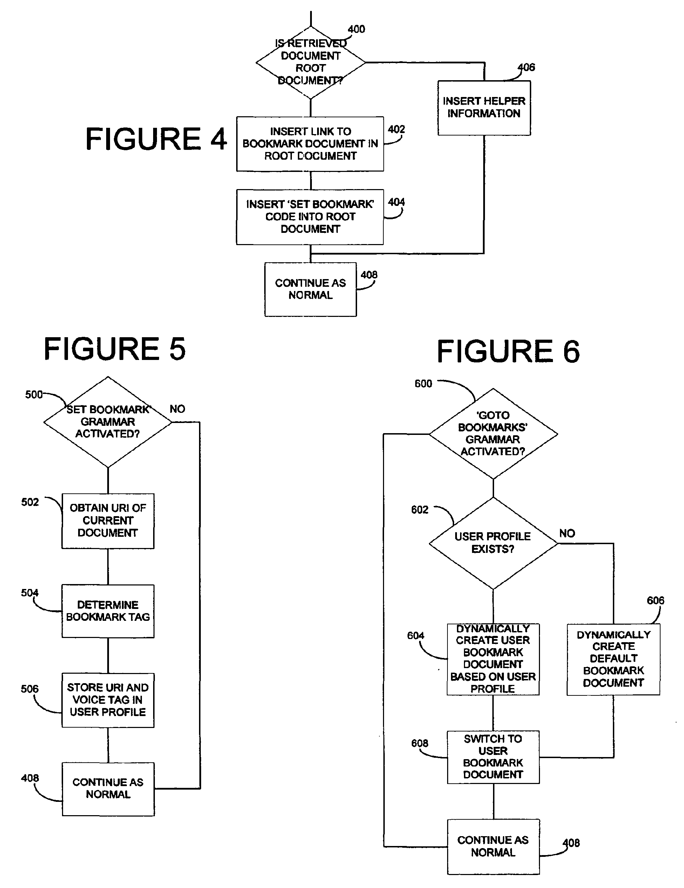

Referring now to Figure 3, there is shown a block diagram of a VoiceXML system 300 according to an embodiment of the present invention, in which functionally similar elements to those shown in Figure 1 are given identical numerical identifiers. Example functionality is illustrated by way of the flow diagrams shown in Figures 4 to 6.

When a user of the telephone 102 establishes a call with the media platform 106 the media platform 106 translates the called subscriber number to a URI of a root VoiceXML document of a voice application. The document server 302 retrieves this document from any one of the available document sources, as defined by the URI. For example, a document may be provided from a storage device 112 containing predetermined VoiceXML documents, from a dynamic VoiceXML page generator 114, or from a remote source 118 through a network 116 such as the Internet.

The retrieved document 202 is passed to a bookmark manager, or document processor, 304 which determines (step 400) whether the document is the root document of the voice application, and if so dynamically modifies the retrieved document by inserting additional VoiceXML code therein. A first portion of inserted VoiceXML code enables a user to store a bookmark to the current document and, if applicable, to the current dialog within the current document. A second portion of inserted VoiceXML code enables a user to retrieve and/or access previously stored bookmarks. The inserted code is preferably inserted in the root document of the voice application which ensures that any grammars defined therein are active for the whole duration of the user's interactive session with the voice application.

In one embodiment, the inserted VoiceXML code defines one or more grammars which, when triggered, cause a bookmark for the current document to be stored. For example, the inserted grammars may include words or phrases such as:
"Set Bookmark"
"Add Bookmark"
"Set Favourite"
"Add Favourite"

In addition to spoken grammars, a DTMF tone sequence such as '##' may additionally be defined.

One way in which this can be achieved with VoiceXML is by causing an event to be triggered upon detection of one of the grammars, as shown below in Table 1:

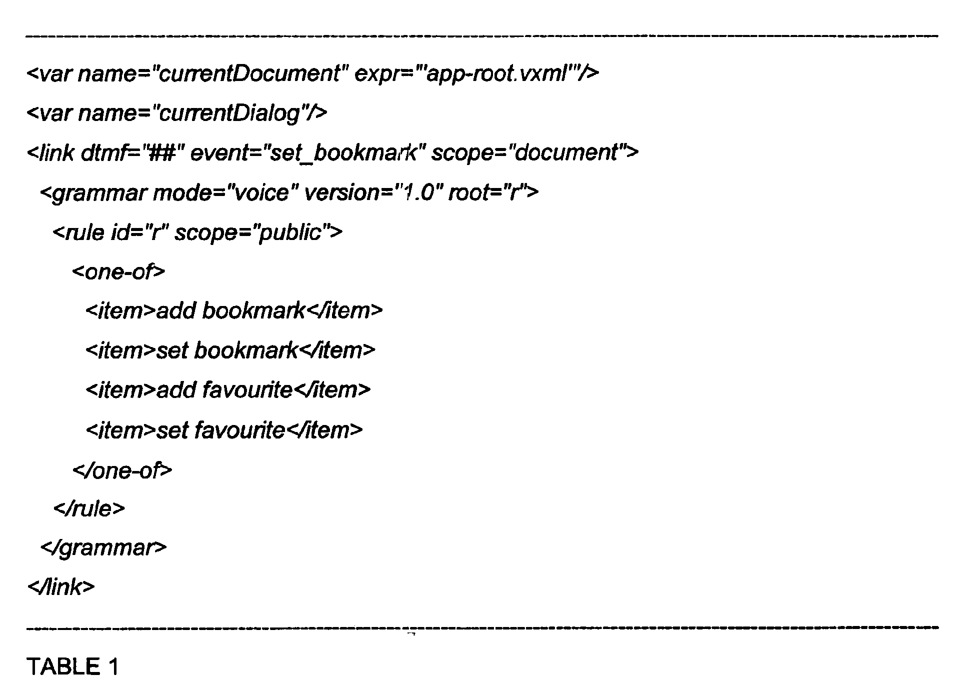

The above code causes an event 'set_bookmark' to be triggered when one of the defined grammars is detected.

An event handler catch routine is additionally inserted into the root document to handle the storing of the bookmark in response to an activated grammar.

In order to store a bookmark the system has to obtain the URI of the current document, and associate a user-tag with the URI. However the current version of VoiceXML, version 2.0, does not provide a convenient way of retrieving the URI of the current document.

To enable the URI of the current document to be determined, the bookmark manager 304 additionally inserts helper information (step 406) into each document retrieved via the document server 302. The helper information may be inserted, for example, in the form of one or more global variables identifying the current document and, if applicable, the current dialog. For example, the identity of the document may be obtained from the URI of the document retrieved from the document server 302, and the identity of each dialog may be obtained by examining the parameters of the <dialog> tag within each document, if present.

An example is shown below:
*<param name="sapplication.currentDocument"expr="grenoble_weather_today.vxml*"/>

When the 'set_bookmark' event is caught (step 500), the identity of the current document and/or dialog is obtained from the inserted global variables (step 502). This information is sent to the bookmark manager 304 which may then determine a tag to be stored with bookmark (step 504). The tag is used as an aide-mémoire to assist the user in recalling the document pointed to by the bookmark.

The tag is preferably a text string and may be determined, for example, by extracting the name of the document, or dialog name, and removing any non-alphanumeric characters and file extensions. This is generally possible since document and dialog names are typically chosen to be representative of the content thereof. For example, the document 212 shown in Figure 2 which provides weather information for Grenoble today is called 'grenoble_weather_today.vxml', and the determined voice tag may be 'Grenoble Weather Today'.

For example, if the user speaks the word 'set bookmark' whilst listening to VoiceXML document 214, the bookmark may contain the following information:
*URI: www.hp.com*/*VoiceXML*/*grenoble_weather_tomomow.vxml*
*TAG: Grenoble Weather Tomorrow*

This approach is advantageous because, since the tag is determined automatically by the system, and is thus available in text format, the tag can be defined as a VoiceXML grammar which in turn can be used, as described further below, for accessing the saved bookmark later. The system may also allow the user to choose from one or more variations of the determined tags. The system may also check to ensure that a selected tag has not been allocated already, and may offer an alterative tag in such a case.

Preferably the user is presented with a VoiceXML document which confirms the name of the bookmark tag to the user, and asks the user to confirm whether the chosen tag is acceptable. This may be provided, for example, via a VoiceXML document dynamically created by the bookmark manager 304.

An alternative approach is to request the user to speak a voice tag to be associated with the bookmark, although due to difficulties in performing speech to text conversion on untrained free speech this approach may demand higher performance capabilities. However, audio matching techniques could be used instead, in which case the tag may be an audio file or a link to an audio file.

Whichever technique is used, the URI and tag information is stored in a user profile store 306 (step 506) using, for example, an appropriate software routine. To determine where to store the bookmark information, the identity of the user is obtained, for example, whenever a call is placed to the media platform 106. This may be achieved, for example, by retrieving the calling party identification (caller ID) from the telephony network 104, or by requiring the user to enter account and/or authentication information prior to accessing the voice application.

An example of an appropriate exception handler catch routine is shown below in Table 2:

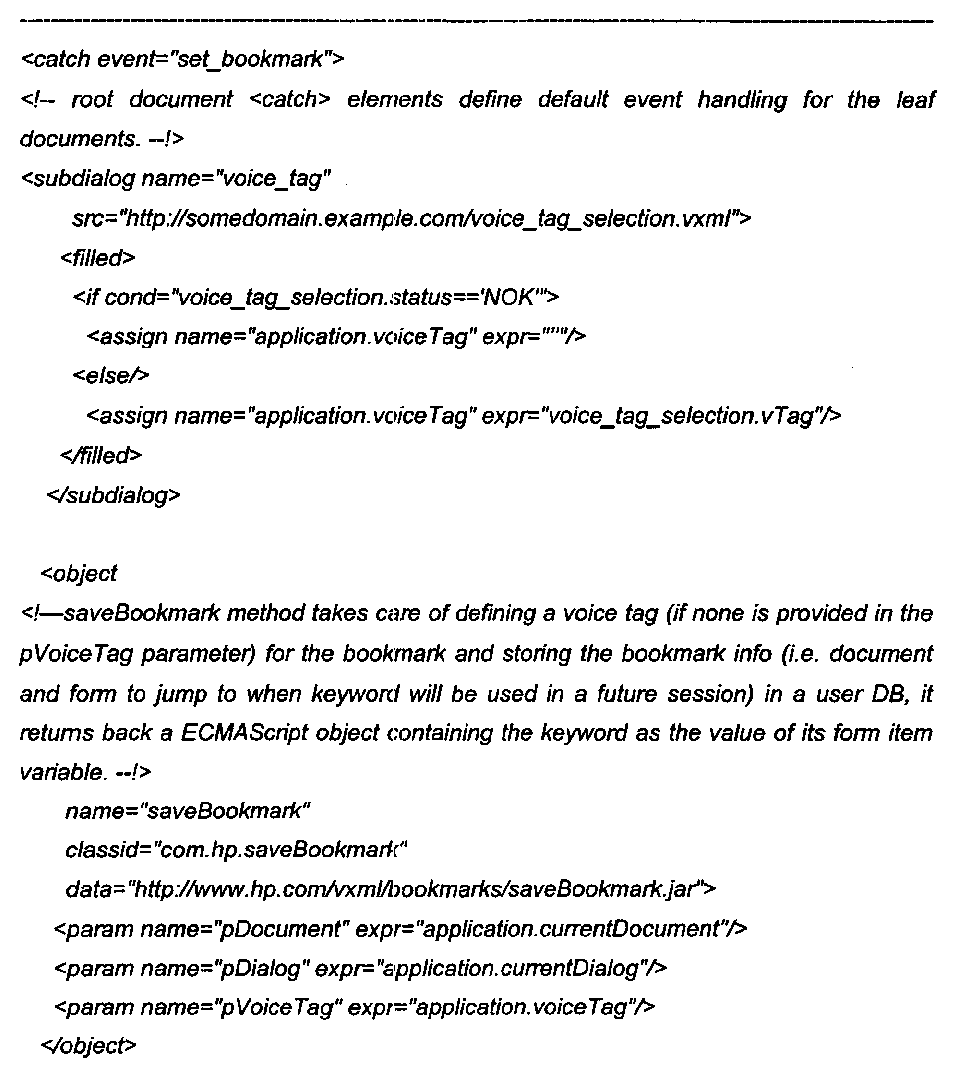

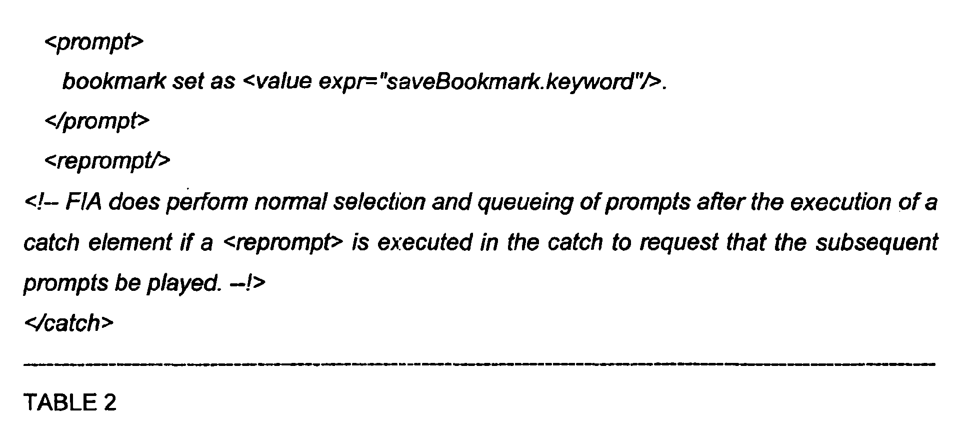

In an alternative embodiment, the event handler may obtain the details of the current document from the above-mentioned global variables, and perform a HTTP post, for example, sending this data to an intelligent user profile server. Since a HTTP post causes a transition in the current document, it may be preferable to use proprietary VoiceXML extension tags to achieve the post operation.

Once a user has stored one or more bookmarks in their user profile, the bookmarks may be retrieved later, either within the same session, or during a new call to the voice application. The way in which a bookmark may be retrieved is described below.

If no user profile information exists in the user profile store 306 then a new entry may be created. If a user profile does exist, the media platform may make available the user profile to the current instance of bookmark manager and VoiceXML interpreter.

Referring again to the example of Figure 2, assume that the user has, on a previously bookmarked the VoiceXML documents 'grenoble_weather_today.vxml' and 'grenoble_ski.vxml' using the above-described techniques.

As mentioned above, when the welcome document is retrieved by the document server 302, the bookmark manager 304 inserts suitable VoiceXML code into the document enabling the user to retrieve the bookmarks.

In one embodiment, the inserted VoiceXML code defines one or more suitable grammars, such as "Goto Bookmark", and links this grammar with a user bookmark document, for example 'bookmarkSelection.vxml', as shown below in Table 3:

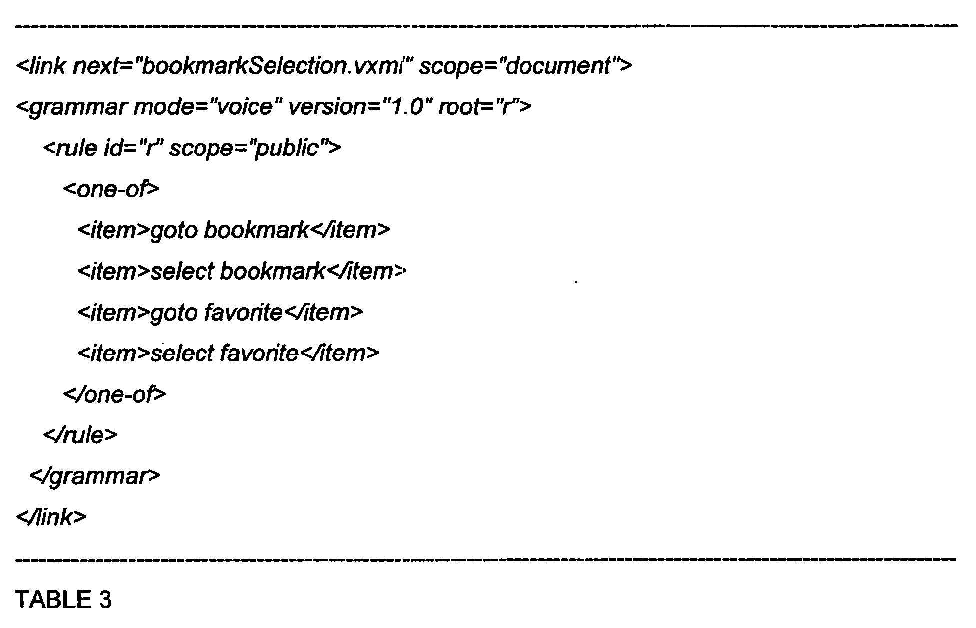

As previously mentioned, preferably these grammars are inserted into the root document of a voice application thereby allowing the grammars to be active through the life of the current session.

Whenever the user speaks one of the grammars, such as 'Goto bookmark' (step 600), the system determines (step 602) whether the user has a profile stored in the user profile store 306. If yes, the user loookmark document is retrieved via the document server 302. Preferably the URI of the user bookmark document indicates that the document is available from the user profile store 306 and is dynamically created (step 604), for example using an appropriate software application, in a known manner. The user bookmark document is arranged to contain user bookmark information stored in the user profile store 306 for the current user. If no user profile exists, a default bookmark document (step 606) is created, indicating, for example, that the user has no bookmarks stored in the user profile store 306.

For example, the dynamically created VoiceXML document may present the following to the user:
"Your bookmarks are:
   1 - Grenoble Weather Today
   2 - Grenoble ski conditions
Say 'exit' to return to the previous document"

Thus, if the user wishes to jump to the document 'grenoble_today.vxml' the user may speak the words 'One' or 'Grenoble weather today' or may press the '1' key on the telephone keypad. Preferably the appropriate grammars and links are provided in suitable VoiceXML mark-up language. If the user does not wish to jump to any previously defined bookmark the user bookmark file uses an appropriate grammar to enable the user to return to the previously accessed document. To enable a link back to the document which was being accessed when the 'Goto bookmark' grammar was activated, the user bookmark document preferably includes the URI of the previous document obtained, for example, using the techniques described above.

In an alternative embodiment, when the voice application is initially accessed the bookmark manager 304 inserts in the root document a link and associated grammar for each of the bookmarks stored for the user in the user profile store 306. An example of such VoiceXML code is shown below in Table 4:

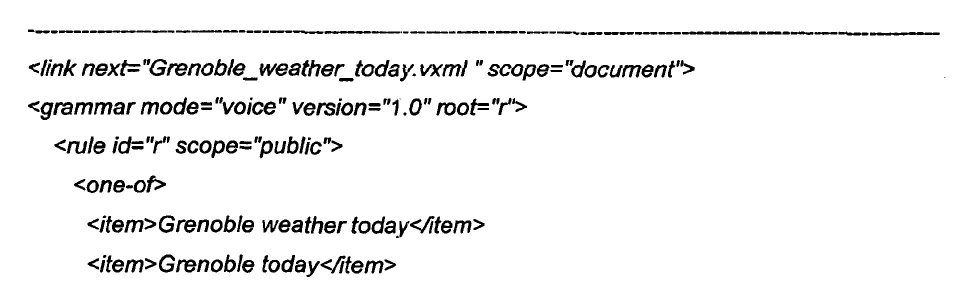

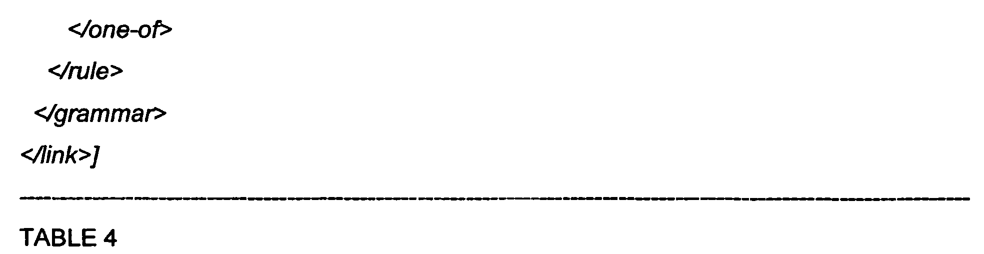

One of the problems with this approach is that, because the root document is only loaded when the voice application is initially accessed, any bookmarks set by the user during the current session will only be active during the next session.

To overcome this, the bookmark manager 304 modifies the original root document to create a new root document having a different name from the original root each time a bookmark is set by the user. Leaf documents retrieved from the document server 302 are also modified by the bookmark manager 304 to change the URI of the original root document to the URI of the new root document. In this way, effectively a new voice application is started, which forces VoiceXML interpreter to load the new application, and hence to activate the new grammars present therein.

As already mentioned, the above-described embodiments enable bookmarking functionality to added to existing voice applications, without requiring any changes to be made to either the VoiceXML interpreter. Furthermore, since the modifications to the VoiceXML documents is done 'on-the-fly' the original VoiceXML documents also require no changes to be made. Although it is preferable that no changes are made to either the VoiceXML interpreter or the original VoiceXML documents, those skilled in the art will appreciate that, if required, the above described techniques could equally be implemented in a proprietary VoiceXML interpreter solution.

Those skilled in the art will appreciate that the above described embodiments are merely exemplary, and elements described herein may be arranged in a multitude of different configurations, for example with elements either locally or remotely located without consequence, where appropriate.

Although the above description has been made primarily with reference to voice applications, those skilled in the art will appreciate that the outlined techniques could also be adapted for use with other document browsing systems, including Internet browsing systems.

## Claims

1. A document browsing system for storing, in response to a user request, bookmark information relating to a document presentable to a user through an interpreter, the document comprising mark-up language and being providable to the interpreter by a document server,
the system comprising:
a document processor for inserting in the document prior to the document being presented to the user additional mark-up language for enabling the user request to be made through the interpreter; and
a data store for storing the bookmark information in response to the user request.

2. The system of claim 1, wherein the document is the root document of a plurality of hierarchically arranged documents.

3. The system of claim 2, wherein the documents form a voice application, wherein the mark-up language is the Voice extensible markup language (VoiceXML), and wherein the interpreter is a VoiceXML interpreter.

4. The system of claim 2, or 3, wherein the inserted mark-up language is inserted in the root document thereby enabling the user to make the user request irrespective of which of the plurality of documents is being presented by the interpreter at the time the request is made.

5. The system of any previous claim wherein the inserted mark-up language defines at least one grammar.

6. The system of claim 5, wherein the triggering of the grammar causes an event to be triggered.

7. The system of claim 6, further comprising an event handler for catching the event, obtaining details of the current document and causing the obtained details to be stored in the data store.

8. The system of claim 7, wherein the details of the current document are obtained through helper information additionally inserted in each document by the document processor prior to presentation of the document.

9. The system of claim 8, wherein the helper information identifies a document.

10. The system of claim 9, wherein the helper information additionally identifies a dialogue within the document.

11. The system of any previous claim wherein the stored information includes a link to the document and a tag.

12. The system of claim 11, wherein the tag is text string derived from the inserted helper information.

13. The system of claim 11, wherein the tag is an audio file recorded by the user.

14. A document browsing system for accessing, in response to a user request, a bookmarked document a link to which is stored in a storage device, the document browsing system providing access to a plurality of documents comprising mark-up language, the documents being presentable to the user through an interpreter,
the system comprising:
a document server for providing one of the plurality of documents to the interpreter; and
a document processor for inserting in at least one document presented to the user prior
to the document being presented additional mark-up language enabling the user request to be made.

15. The system of claim 14, wherein the plurality of documents are hierarchically arranged and further wherein the additional mark-up language is inserted into the root document of the plurality of hierarchically arranged documents such that the user request may be made irrespective of which of the plurality of documents is being presented by the interpreter at the time the request is made.

16. The system of claim 14, wherein the additional mark-up language is inserted into each document prior to presentation by the interpreter.

17. The system of any of claims 14, 15 or 16 wherein the document browsing system forms an interactive voice application.

18. The system of any of claims 14 to 17, wherein the mark-up language is the voice extensible mark-up language (VoiceXML), wherein the interpreter is a VoiceXML interpreter, and wherein the inserted mark-up language defines a grammar.

19. The system of any of claims 14 to 18, wherein the inserted mark-up language causes, in response to the user request, a document to be presented to the user, the document including a link to the bookmarked document.

20. The system of any of claims 14 to 18, wherein the inserted mark-up language causes, in response to the user request, the bookmarked document to be presented to the user through the user interface.

21. The system of any of claims 14 to 20, wherein the inserted mark-up language defines a grammar and the link.

22. The system of claim 21, wherein the link is the tag determined in accordance with the operation of the system according to claims 11, 12 and 13.

23. A method of bookmarking a document, in response to a user request, wherein the document comprises mark-up language and is presentable to a user through an interpreter,
comprising:
providing the document to the interpreter;
inserting in the document prior to the document being presented to the user additional mark-up language for enabling the user request to be made through the interpreter; and
storing information relating to the document in response to the user request.

24. The method of claim 23, wherein the document is the root document of a plurality of hierarchically arranged documents.

25. The method of claim 24, wherein the documents form a voice application, wherein the mark-up language is the Voice extensible markup language (VoiceXML), and wherein the interpreter is a VoiceXML interpreter.

26. The method of claim 24, or 25, wherein the step of inserting the mark-up language is adapted for inserting the mark-up language in the root document thereby enabling the user to make the user request irrespective of which of the plurality of documents is being presented by the interpreter at the time the request is made.

27. The method of any of claims 23 to 26, wherein the inserted mark-up language defines at least one grammar.

28. The method of claim 27, further comprising trigger an event when the grammar is detected.

29. The method of claim 28, further comprising catching the event in an event handler, obtaining details of the current document and storing the obtained details in the data store.

30. The method of claim 29, wherein the step of inserting further comprises inserting helper information identifying the details of the current document.

31. The method of claim 30, wherein the helper information additionally identifies a dialogue within the document.

32. The method of any of claims 23 to 31 wherein the step of storing further comprises storing a link to the document and a tag.

33. The method of claim 32, wherein the tag is text string derived from the inserted helper information.

34. The method of claim 32, wherein the tag is an audio file recorded by the user.

35. A method of accessing in a document browsing system, in response to a user request, a bookmarked document a link to which is stored in a storage device, the document browsing system providing access to a plurality of documents comprising mark-up language, and in which the documents are presentable to the user through an interpreter,
comprising:
providing the presented document to the interpreter; and
inserting in at least one presented document prior to the document being presented to the user additional mark-up language enabling the user request to be made.

36. The method of claim 35, wherein the plurality of documents are hierarchically arranged and wherein the step of inserting the additional mark-up language is adapted for inserting the mark-up language of the root document of the plurality of hierarchically arranged documents such that the user request may be made irrespective of which of the plurality of documents is being presented by the interpreter at the time the request is made.

37. The method of claim 35, wherein the step of inserting the additional mark-up language is adapted for inserting the mark-up language into each document prior to presentation by the interpreter.

38. The method of any of claims 35, 36 or 37 wherein the document browsing system forms an interactive voice application.

39. The method of any of claims 35 to 38, wherein the mark-up language is the voice extensible mark-up language (VoiceXML), wherein the interpreter is a VoiceXML interpreter, and wherein the inserted mark-up language defines a grammar.

40. The method of any of claims 35 to 39, further comprising causing, in response to the user request, a document to be presented to the user, the document including a link to the bookmarked document.

41. The method of any of claims 35 to 39, further comprising causing, in response to the user request, the bookmarked document to be presented to the user.

42. The method of any of claims 35 to 41, wherein the inserted mark-up language defines a grammar and the link.

43. The method of claim 42, wherein the link is the tag determined in accordance with the operation of the system according to claims 11, 12 and 13.
